# DEMANDE DE BREVET EUROPEEN

(11) **EP 4 843 970 A1**
(43) Date de publication de la demande: **25.11.2026**
(21) Numéro de dépôt: 25181872.0
(22) Date de dépôt: 10.06.2025
(51) Int. Cl.: C04B 35/593, C04B 35/645, G04B 19/12, G04B 37/22, G04B 39/00, G04B 45/00

(54) **COMPOSANT HORLOGER CÉRAMIQUE AYANT UN ASPECT GRANITE**

(30) Priorité: 22.05.2025 EP 25178228
(71) Demandeur: Comadur S.A., 2400 Le Locle (CH)
(72) Inventeur: BOUCHET, Julien, 68480 Liebsdorf (FR); ACTIS-DATTA, Arnaud, 2854 Bassecourt (CH); VUILLE, Pierry, 2338 Les Emibois (CH)
(74) Mandataire: ICB SA

(57) **Abrégé**

L'invention concerne un composant horloger ou bijoutier comprenant une matrice de Si₃N₄ (2), et une phase dispersée de carbure de bore (B₄C) (3), la phase de carbure de bore représentant de 10 à 30 % en masse, de préférence 10 à 20 % en masse de la composition totale, les quantités respectives des composants étant telles qu'additionnées entre elles, elles atteignent les 100 %, et ledit composant ayant l'aspect d'un granite naturel. Pour obtenir l'aspect de granite coloré, du saphir opaque blanc ou coloré peut être ajouté à la matrice Si₃N₄ . L'invention concerne aussi un procédé d'obtention d'un tel composant.

## Description

### Domaine technique de l'invention

La présente invention concerne des articles, en particulier des composants horlogers ou bijoutiers, tels que des cadrans et des lunettes de montres, présentant un aspect visuel similaire à celui du granite naturel, tout en offrant la possibilité d'une réalisation d'un article céramique monobloc proche de la forme finale souhaitée, pouvant recevoir une opération de finition, sans découpe ni usinage complexe que l'on devrait réaliser si l'on partait d'un bloc de matière de base. La présente invention concerne aussi le matériau céramique et le procédé d'obtention d'un tel article.

### Arrière-plan technologique

Les manufactures horlogères haut de gamme utilisent des matériaux naturels et plus précisément des pierres naturelles, telles que l'onyx, la malachite, le lapis-lazuli, la turquoise, l'opale, le jaspe, l'aventurine, l'œil de tigre, le marbre, le granite ou la météorite pour fabriquer différentes pièces d'habillage de leurs montres ou plus généralement de leurs pièces d'horlogerie.

Le granite naturel, traditionnellement utilisé pour des applications esthétiques et techniques (monuments, décoration intérieure, plans de travail, dallage, sculpture, mortiers, table de métrologie, rouleaux de broyage) impose de découper chaque pièce individuellement dans un bloc massif, processus qui génère d'importants coûts de matériaux et d'usinage, ainsi qu'une perte importante de matière première. En outre le granite naturel peut présenter des hétérogénéités de structure et notamment des défauts tels que des fissures, et/ou des propriétés mécaniques qui fluctuent selon sa provenance. De plus, cette approche limite considérablement la précision dimensionnelle et la variété des formes réalisables, rendant difficile l'obtention de pièces complexes ou de formes très fines.

Les céramiques à base de nitrure de silicium (Si₃N₄), bien que présentant des propriétés mécaniques intéressantes, ne permettent généralement pas d'obtenir l'aspect granitique recherché.

### Résumé de l'invention

La présente invention a pour objet de pallier les inconvénients précités en proposant une nouvelle composition de céramique à base nitrure de silicium ayant un aspect de granite naturel.

En particulier, l'invention résout le problème technique consistant à produire un matériau composite céramique combinant un aspect esthétique visuellement très proche du granite naturel avec la possibilité d'une réalisation directe à la forme finale souhaitée, sans opérations de découpe complexes et coûteuses.

En proposant un procédé alternatif capable de fabriquer directement le matériau composite dans des ébauches ou des préformes au plus proche des pièces horlogères finales souhaitées, la présente invention apporte une solution innovante pour pallier aux contraintes d'un granit naturel, tout en garantissant des propriétés mécaniques optimisées telles qu'une dureté élevée, une légèreté et une excellente finition esthétique par exemple via au moins un usinage de terminaison tel que par exemple un sablage, un polissage, une ablation laser ou encore un satinage ou tout autre finition horlogère obtenue après frittage.

Un premier aspect de la présente invention concerne un composant horloger comprenant une matrice de nitrure de silicium (Si₃N₄), et une phase dispersée de carbure de bore (B₄C), la phase de carbure de bore représentant de 10 à 30 % en masse, et de préférence 10 à 20 % en masse de la composition totale, les quantités respectives des phases étant telles qu'additionnées entre elles, elles atteignent les 100 % et ledit composant ayant l'aspect d'un granite naturel.

Avantageusement, le procédé de l'invention permet la réalisation de granites colorés par l'utilisation, de particules supplémentaires tels que des particules de cristaux mono ou polycristallins, opaques ou translucides, constituées par exemple de particules de saphir et/ou de grenats et/ou de spinelle, ces particules pouvant être blanches ou colorées et pouvant représenter jusqu'à 10 à 20 % en masse de la composition totale. Cette poudre additionnelle dispersée dans la matrice de nitrure de silicium, a de préférence une granulométrie comprise entre 100 et 1000 µm et est constituée de façon préférentielle de particules de saphir craquelé blanches ou dopées au titane ou chrome par exemple.

Par ailleurs, la présente invention permet l'obtention d'une pièce monobloc avec des caractéristiques mécaniques isotropes et répétables industriellement, ce qui n'est souvent pas le cas pour une roche naturelle.

De préférence le carbure de bore forme des agglomérats macroscopiques visibles à l'œil nu pour se rapprocher des grains visuels observés sur le granite naturel (aspect grenu ou moucheté).

Avantageusement, la matrice de nitrure de silicium comprend en outre de 3 à 12 % en masse de YAG (Y₃Al₂(AlO₄)₃).

De préférence, ledit composant est un élément d'habillage horloger ou un élément décoratif tel qu'un cadran, une lunette, une carrure, une couronne, un poussoir ou encore un élément de bracelet.

Avantageusement, le composant horloger de l'invention présente les caractéristiques suivantes :
- une dureté entre supérieure ou égale à 900 HV10 ;
- une densité de 2,6 à 4,3 g cm⁻³ et de préférence entre 2,6 et 3,3 g cm⁻³ ;
- une ténacité supérieure à 4 MPa.√m.

Un second aspect de l'invention concerne un procédé de fabrication d'un composant d'horlogerie un composant décoratif comprenant les étapes de :
- préparer un mélange de poudres comprenant au moins 70 % en masse d'une poudre de Si3N4 formant une matrice de base, et entre 10 et 30 % en masse et de préférence 10 à 20 % d'une poudre de carbure de bore (B4C), de préférence entre 13 et 17 % en masse de la poudre étant mélangée de façon hétérogène ; les quantités respectives des composants étant telles qu'additionnées entre elles, elles atteignent les 100 % ;
- mettre à disposition un moule préformé conducteur réfractaire ;
- déposer le mélange de poudres dans le moule préformé conducteur réfractaire pour former un article monobloc ;
- effectuer un cycle de frittage type flash ou SPS opéré de préférence avec une température de montée d'au moins 50°C par minute, de préférence au moins 90°C par minute, appliqué jusqu'à une température plateau comprise de préférence entre 1500°C et 2000°C. La température plateau est, de préférence, maintenue constante entre 2 minutes et 40 minutes. La pression appliquée lors du cycle de frittage flash est de préférence d'au moins 15 MPa, de préférence supérieure à 40 MPa ;
- démouler l'article monobloc obtenu ;
- effectuer une finition de l'article monobloc pour obtenir le composant souhaité.

Le moule est de préférence composé essentiellement de graphite.

En guise de liant, la poudre de Si₃N₄ comprend de préférence en outre entre 1 % et 5 % en masse d'oxyde d'aluminium (Al2O3). Dans ce cas, entre 1 % et 8 % en masse d'oxyde d'Yttrium peut aussi avantageusement être ajouté de façon à former lors du frittage une phase YAG (Y3Al2(AlO4)3).

1 à 2 % en masse de TiO2 peuvent aussi être ajouté au mélange de poudres de façon à lui donner une teinte plus foncée, le TiO2 et le Si3N4 étant pré-mélangé de façon homogène.

L'ajout 10 à 20 % en masse, de préférence entre 13 % et 17 % en masse de cristaux mono ou polycristallins, opaques ou translucides, comprenant par exemple des particules de saphir, et/ou de grenats et/ou de spinelle, blanches ou colorées, permet d'améliorer encore l'aspect du composant horloger en ajoutant un contraste, de la brillance, voire de la couleur. Dans le cas du saphir, la poudre de saphir est de préférence une poudre grossière présentant une granulométrie comprise entre 100 et 1000 µm issue des différentes étapes de production et/ou de transformation de cristal de saphir.

Enfin, selon le rendu désiré, une étape d'usinage et/ou de polissage du composant, ou tout autre finition horlogère obtenue après frittage peut être effectuée. Cette étape d'usinage peut être un usinage de terminaison tel qu'un sablage, un polissage, une ablation laser ou encore un satinage.

D'autres caractéristiques et avantages de l'invention apparaîtront à la lecture de la description détaillée qui va suivre, en référence aux figures annexées.

### Brève description de la figure

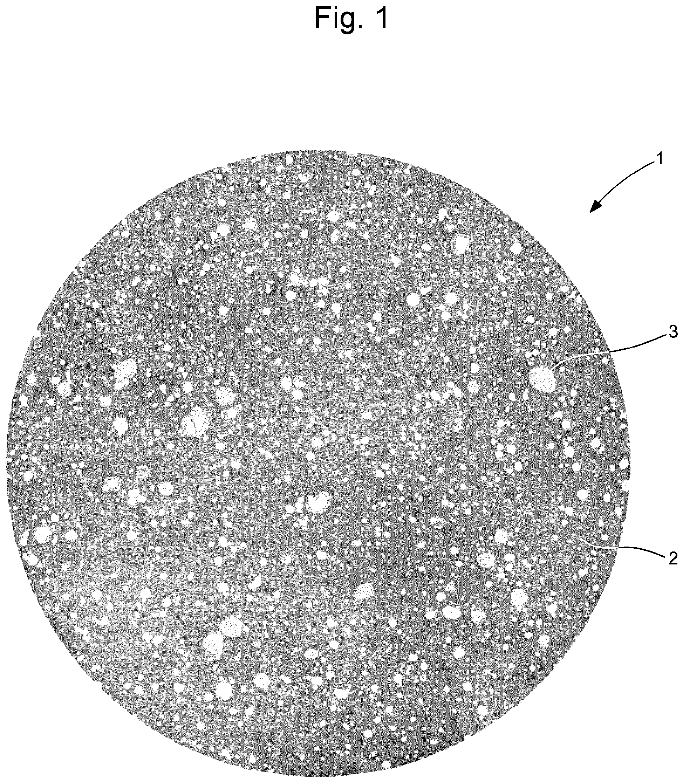

La figure 1 représente une ébauche de cadran horloger réalisée avec le matériau céramique selon l'invention.

### Description détaillée de l'invention

La présente invention se rapporte à un article décoratif et/ou fonctionnel réalisé dans un matériau céramique ayant une matrice de nitrure de silicium (Si₃N₄), dans laquelle est dispersée une phase de carbure de bore (B₄C). Dans le domaine horloger, cet article peut être un composant d'habillage tel qu'une carrure, un fond, une lunette, un cadran, etc. A titre illustratif, un cadran 1 a été réalisé avec le matériau céramique selon l'invention et est représenté à la figure 1. Comme on le voit sur cette figure le rendu visuel de cet exemple montre un aspect moucheté proche d'un granite.

L'article en céramique selon l'invention comporte une phase 2 plus ou moins sombre, majoritairement composée de nitrure de silicium (Si₃N₄), et une phase 3 plus claire majoritairement composée de carbure de bore.

La poudre de carbure de bore ayant tendance à s'agglomérer, il est possible de contrôler l'aspect obtenu en mélangeant de façon plus ou moins intense la poudre de nitrure de silicium avec la poudre de carbure de bore : un mélange intense réduira et la taille des agglomérats, donnant un aspect visuel plus homogène, tandis qu'un mélange « doux » laissera ces agglomérats inchangés, donnant lieu à un mouchetage plus grossier. A l'extrême, on peut imaginer un procédé dans lequel le mélange est simplement l'ajout du B₄C en fin de remplissage et secouer doucement le moule pour homogénéiser l'aspect final.

L'ajout de poudre de cristaux mono ou polycristallins, opaques ou translucides grossière décrite ci-dessus permet d'encore amplifier l'aspect grenu/moucheté obtenu. Une telle poudre grossière est par exemple issue de l'usinage de pièce en saphir provenant d'autres productions. Ce saphir peut avantageusement être du saphir monocristallin.

La matrice de nitrure de silicium peut également être de plusieurs compositions. Avantageusement, la matrice de nitrure de silicium comprend (constitué de) :
- Si3N4 - nitrure de silicium de base (au moins 85 % en masse) ;
- Y2O3 - oxyde d'yttrium (1 à 8 % en masse) ;
- Al2O3 - oxyde d'aluminium (1 à 5 % en masse) ;
- 0 à 5 % d'autres éléments ;
les quantités respectives des poudres étant telles qu'additionnées entre elles, elles atteignent les 100 %.

Le nitrure de silicium est le matériau principal, les deux autres oxydes ayant un rôle de liant. Ces deux oxydes peuvent se combiner pour former une phase YAG (Y₃Al₂(AlO₄)₃). L'oxyde d'aluminium peut aussi, seul, jouer ce rôle de liant. Il est néanmoins possible aussi de fritter le nitrure de silicium sans liant additionnel.

Il est possible de changer la couleur du nitrure de silicium en ajoutant certains composants à la formulation de base : l'oxyde de titane permet une coloration plus sombre, allant jusqu'au noir, le nitrure de titane permet une coloration similaire au bronze, tandis qu'une composition tertiaire TiN + TiO2 + SiC permet des colorations de bruns-marrons à cuivrées.

Le frittage flash, ou spark plasma sintering (SPS), en anglais, est une méthode de frittage par pressage à chaud, utilisant l'effet joule et/ou effet inductif pour chauffer la poudre dans un creuset cylindrique entre deux électrodes réfractaires et conductrices. Généralement, lesdites électrodes préformées sont essentiellement composées de graphite, et l'opération est faite sous atmosphère inerte ou sous vide. L'ensemble est soumis à une pression de quelques dizaines de mégapascals sous l'action d'une presse. Un courant continu ou alternatif de plusieurs kiloampères, pulsé ou non, est appliqué entre les électrodes avec une tension de quelques volts. Dans la présente invention, les électrodes sont préformées, formant un moule, de façon à donner directement la forme souhaitée à l'objet fritté. Le chauffage par effet joule directement au sein de la poudre à fritter permet d'atteindre des vitesses de chauffage et de refroidissement très élevées (jusqu'à 1000 K/min), ce qui réduit la durée totale du processus à quelques dizaines de minutes seulement. La rapidité du chauffage et du refroidissement a pour effet de limiter la croissance des grains et donc de préserver la finesse de la microstructure du matériau, ce qui optimise les propriétés mécaniques - dureté, ténacité - du matériau, dont la densité dépasse souvent 90 % de la valeur théorique du matériau, grâce à une porosité faible. Cela permet également de lier des matières de natures différentes, avec un transfert d'énergie important sur une durée courte.

Le procédé de fabrication du composant horloger de l'invention comprend les étapes suivantes :
- mélange des poudres Si₃N₄ et carbure de bore (B₄C) ;
- remplissage du moule en graphite préformé avec le mélange pulvérulent ;
- pressage et frittage simultané par Frittage flash, avec montée en température rapide d'au moins 50°C min⁻¹ jusqu'à un palier compris entre 1500°C et 2000°C, maintien du palier thermique au moins 2 minutes à une pression constante de 40 MPa. Utilisation d'un gaz neutre (type Argon, azote etc.) pour le frittage ;
- refroidissement contrôlé et démoulage des pièces directement dans leur forme finale.

Les pièces obtenues directement à la forme finale comprennent des disques d'un diamètre allant de 10 à 50 mm, avec une épaisseur finale après frittage d'environ 1 à 15 mm. Ces dimensions conviennent particulièrement bien à la fabrication sur mesure de composants horlogers tels que les cadrans, les lunettes et les carrures.

Le composite céramique selon l'invention présente plusieurs avantages significatifs :
- un aspect esthétique similaire au granite ou granite coloré, obtenu directement à la forme finale souhaitée, sans nécessiter de découpe dans la masse ;
- une matière plus homogène et répétable en production qu'avec du granite naturel ;
- une dureté élevée mesurée supérieure ou égale à 900 HV10, garantissant une bonne résistance à l'usure ;
- une ténacité d'au moins 4 MPa.√m ;
- une densité de 2,6 à 4,3 g cm⁻³ de préférence entre 2,6 et 3,3 g cm⁻³ assurant une légèreté appréciable ;
- une facilité de polissage élevée, améliorant sensiblement la finition esthétique ;
- une précision dimensionnelle accrue grâce à la réalisation directe par SPS ;
- une isotropie des caractéristiques mécaniques favorisant les éventuels usinages ou opérations de finition.

Les mesures de dureté sont des duretés HV10, c.à.d. une dureté Vickers réalisées sous une charge de 10 kg. La ténacité a été déterminée sur base des mesures des longueurs des fissures aux quatre extrémités des diagonales de l'empreinte de dureté selon la formule : ${K}_{1 C} = 0.0319 \frac{P}{{al}^{1 / 2}}$ avec P qui est la charge appliquée (N), a qui est la demi-diagonale (m) et I qui est la longueur de la fissure mesurée (m).

### Exemples

L'ébauche de cadran de la figure 1 a été produite selon le canevas suivant :
a. mélange léger (i.e. laissant des agglomérats) de 70 % en masse de poudre matrice de Si₃N₄ à 15 % en masse de (B₄C) et 15 % en masse de saphir, opaque blanc ou coloré, issus de différentes étapes de production de pièces en saphir ;
b. remplissage du mélange pulvérulent poudre formé à l'étape a). dans un moule en graphite préformé à la géométrie de l'ébauche de cadran souhaité ;
c. pressage et frittage simultané par frittage flash (SPS en Anglais), avec montée en température rapide à 95°C min⁻¹ jusqu'à 1750°C, palier thermique de 10 minutes à une pression constante d'au moins 40 MPa. Le frittage est fait sous atmosphère inerte ;
d. refroidissement contrôlé à 90°C/min. et démoulage des pièces directement dans leur forme finale.

Dans cet exemple, la poudre de Si₃N₄ comprend environs 10 % en masse de YAG pour faciliter le frittage.

L'ébauche de cadran 1 obtenue est représentée à la figure 1. On y observe un aspect gris foncé moucheté de taches claires reproduisant l'aspect d'un granite naturel.

## Revendications

1. Composant horloger (1) comprenant matrice céramique de Si3N4 (2), et une phase dispersée de carbure de bore (B4C) (3), la phase de carbure de bore représentant de 10 à 30 % en masse et de préférence 10 à 20 % en masse de la composition totale, les quantités respectives des phases étant telles qu'additionnées entre elles, elles atteignent les 100 %.

2. Composant horloger selon la revendication 1 dans lequel est dispersée une phase de cristaux mono ou polycristallins, opaques ou translucides, comprenant par exemple des particules de saphir, de grenats, ou de spinelle blanches ou colorées, représentant 10 à 20 % en masse de la composition totale.

3. Composant horloger selon la revendication 2 dans lequel la phase saphir comprend des grains grossiers ayant une taille comprise entre 100 et 1000 µm.

4. Composant horloger selon l'une des revendications précédentes dans lequel le carbure de bore forme des agglomérats macroscopiques (3) visibles à l'œil nu.

5. Composant horloger selon l'une des revendications précédentes dans lequel la matrice comprend en outre 3 à 12 % en masse de YAG (Y₃Al₂(AlO₄)₃).

6. Composant horloger selon l'une des revendications précédentes dans lequel ledit composant est un élément d'habillage horloger ou décoratif tel qu'un cadran, une lunette, une carrure, une couronne, un poussoir ou encore un élément de bracelet.

7. Composant horloger selon l'une des revendications précédentes présentant une dureté supérieure ou égale à 900 HV10.

8. Composant horloger selon l'une des revendications précédentes présentant une densité de 2,6 à 4,3 g cm⁻³, de préférence entre 2,6 et 3,3 g cm⁻³.

9. Composant horloger selon l'une des revendications précédentes présentant une ténacité supérieure ou égale à 4 MPa.√m.

10. Procédé de fabrication d'un composant d'horlogerie comprenant les étapes de :
- remplissage d'un moule préformé conducteur réfractaire avec un mélange de poudres comprenant au moins 70 % en masse de poudre de Si₃N₄ formant une matrice de base et 10 à 30 % en masse de poudre de carbure de bore (B₄C) les quantités respectives des poudres étant telles qu'additionnées entre elles, elles atteignent les 100 % ;
- pressage et frittage du mélange à la forme du moule par frittage flash ;
- refroidissement et démoulage du composant d'horlogerie obtenu.

11. Procédé selon la revendication 10 dans lequel le mélange de poudres comprend en outre entre 1 % et 5 % en masse d'oxyde d'aluminium (Al₂O₃).

12. Procédé selon la revendication 11 dans lequel le mélange de poudres comprend en outre entre 1 % et 8 % en masse d'oxyde d'Yttrium de façon à former lors du frittage une phase YAG (Y₃Al₂(AlO₄)₃).

13. Procédé selon l'une des revendications 10 à 12 dans lequel 1 à 2 % de TiO₂ est ajouté au mélange de poudres de Si₃N₄ de façon à lui donner une teinte plus foncée, le TiO₂ et le Si₃N₄ étant pré-mélangé de façon homogène.

14. Procédé selon l'une des revendications 10 à 13 comprenant l'ajout de 10 à 20 % de poudre de cristaux mono ou polycristallins, opaques ou translucides, comprenant par exemple des particules de saphir de grenats, ou de spinelle.

15. Procédé selon la revendication 14 dans lequel la poudre de cristaux est une poudre grossière présentant une granulométrie comprise entre 100 et 1000 µm issue des différentes étapes de fabrication du saphir.

16. Procédé selon l'une des revendications précédentes dans lequel, lors de l'étape de frittage, une montée en température d'au moins 50°C par minute, de préférence au moins 90°C par minute est appliquée jusqu'à une température plateau entre 1500°C et 2000°C.

17. Procédé selon la revendication 16 dans lequel la température plateau est maintenue constante entre 2 minutes et 40 minutes.

18. Procédé selon l'une des revendications 10 à 17 dans lequel la pression appliquée lors du pressage et du frittage est d'au moins 15 MPa, de préférence plus de 40 Mpa.

19. Procédé selon l'une des revendications précédentes comprenant une éventuelle étape d'usinage, une étape de polissage ou tout autre étape de finition du composant horloger ou bijoutier obtenu après frittage.
